# EUROPÄISCHE PATENTSCHRIFT

(11) **EP 1 118 077 B1**
(45) Veröffentlichungstag und Bekanntmachung des Hinweises auf die Patenterteilung: **02.04.2003**
(21) Anmeldenummer: 98951478.1
(22) Anmeldetag: 28.09.1998
(51) Int. Cl.: G11B 5/41, G06K 19/02

(54) **REINIGUNGSKARTE FÜR MAGNETSPUR- UND CHIPKARTEN-SCHREIB-/LESEGERÄTE SOWIE VERFAHREN ZUR HERSTELLUNG DER REINIGUNGSKARTE**
CLEANING CARD FOR MAGNETIC TRACK AND CHIP CARD READ/WRITE DEVICES AND METHOD FOR PRODUCING SAID CLEANING CARD
CARTE DE NETTOYAGE POUR DISPOSITIFS DE LECTURE/ECRITURE DE PISTE MAGNETIQUE ET DE CARTE A PUCE, AINSI QUE PROCEDE DE FABRICATION DE LADITE CARTE

(43) Veröffentlichungstag der Anmeldung: 25.07.2001
(73) Patentinhaber: Wincor Nixdorf International GmbH, 33106 Paderborn (DE); ECS AG, 8832 Wollerau (CH)
(72) Erfinder: NEUBAUER, Lutz, D-33181 Wünnenberg-Leiberg (DE); RUCH, Ernst, Emil, CH-8832 Wollerau (CH)
(74) Vertreter: Schaumburg, Thoenes & Thurn
(86) Internationale Anmeldenummer: EP9806147
(87) Internationale Veröffentlichungsnummer: WO00019418

(56) Entgegenhaltungen:
- WO-A-98/44449
- GB-A- 2 225 747
- US-A- 5 536 328
- PATENT ABSTRACTS OF JAPAN vol. 018, no. 519 (P-1807), 29. September 1994 & JP 06 176327 A (ASAHI CHEM IND CO LTD;OTHERS: 01), 24. Juni 1994
- PATENT ABSTRACTS OF JAPAN vol. 097, no. 003, 31. März 1997 & JP 08 287429 A (CHIYODA KK;DAIICHI LACE KK), 1. November 1996
- PATENT ABSTRACTS OF JAPAN vol. 096, no. 001, 31. Januar 1996 & JP 07 249156 A (HIROKO YOSHIMOTO;OTHERS: 01), 26. September 1995

## Beschreibung

Die vorliegende Erfindung betrifft eine Reinigungskarte für Magnetspur- und Chipkarten-Schreib/Lesegeräte gemäß dem Oberbegriff des Anspruchs 1.

Reinigungskarten für Magnetspur-Schreib-Lese-Einheiten, wie beispielsweise in Geldausgabe-Automaten von Geldinstituten u.a., sind bekannt und beispielsweise in der DE-PS 35 38 223 beschrieben. Bei solchen Karten befindet sich einseitig auf einem kartenförmigen PVC-Träger zwischen zwei randnahen codierbaren Magnetstreifen ein Reinigungsvlies, das beim Einstecken der Reinigungskarte in das betreffende Gerät auf dem magnetischen Lesekopf des Gerätes gleitet und diesen säubert. Die Reinigungswirkung kann dabei durch vorheriges Auftragen einer Reinigungsflüssigkeit auf das Vlies verbessert werden. Allerdings genügt die hierbei erzielbare Reinigungswirkung den heutigen Anforderungen kaum noch. Zudem sind solche Reinigungskarten für Chipkarten-Kontaktstationen praktisch unbrauchbar, da ein auf der Oberfläche der den Chip abtastenden Kontaktfedern entlanggleitendes Vlies nicht geeignet ist, die Kontaktstellen wirksam zu reinigen.

In der DE-C-196 22 287 wurde eine Reinigungskarte vorgeschlagen, bei der in einen den Chipkartenabmessungen entsprechenden Träger ein das Reinigungsmaterial tragender Schieber eingebaut ist, der nach dem Einführen der Reinigungskarte in ein Schreib/Lesegerät zur Reinigung der Kontakte hin- und herbewegt werden kann. Diese Lösung ist aufwendig.

In der älteren nicht vorveröffentlichten Internationalen Anmeldung PCT/EP97/06409 wurde bereits eine Reinigungskarte der eingangs genannten Art angegeben, die geeignet ist, mit einfachen Mitteln sowohl Magnetspur-, Schreib- und Leseköpfe als auch Chip-Kontaktstationen absolut sicher und optimal zu reinigen. Hierzu wurde vorgeschlagen, daß die Länge der Einzelfasern des Faserflock-Reinigungsmaterials auf mindestens einem der vorgegebenen Flächenbereiche auf der einen oder der anderen Kartenseite von der Länge der Einzelfasern auf den anderen Flächenbereichen verschieden ist, wobei die Einzelfasern auf den verschiedenen Flächenbereichen gleichen oder ungleichen Durchmesser haben. Solche Faserflockfelder gestatten beim Einschieben der Karte in das betreffende Gerät ein quasi Eintauchen der zu reinigenden Magnetspur-Schreib- und Leseköpfe und der Chipkontaktstationen in die verdichteten Einzelfasern mit einer entsprechenden Tiefenreinigung unter einer Bürstenwirkung.

Während mit dieser Reinigungskarte eine gute Reinigung der Leseköpfe und der Chip-Kontakte erzielt wird, müssen daneben die Transportrollen in den Geldausgabeautomaten oder Schreib-/Lesegeräten noch mit eigenen Reinigungsmitteln gereinigt werden.

Die DE-U-94 14 719 beschreibt eine Reinigungskarte für einen Kartenleser, mit der neben dem Magnetkopf des Lesers auch der Transportantrieb für die Karte gereinigt werden soll. Auf einem nicht näher bezeichneten Trägermaterial der Karte ist eine Reinigungsbeschichtung aufgebracht, die beispielsweise aus Faserflock bestehen kann.

Aus der JP-A-06176327 ist eine Reinigungskarte bekannt, die aus einem Faservlies besteht. Eine aus der JP-A-07249156 bekannte Reinigungskarte ist aus drei Schichten aufgebaut, von denen die beiden äußeren aus einem Faservlies bestehen. Auch die innere Schicht kann ggf. von einem Vlies gebildet sein.

Schließlich ist aus der GB-A-2 225 747 eine Reinigungskarte bekannt, die aus einer Hartplastikschicht und einer Vliesschicht besteht, wobei auf der die Vliesschicht tragenden Seite der Hartplastikschicht Magnetspuren aufgebracht sind. Ein auf den Magnetspuren gespeicherter Code ermöglicht das Einführen der Karte in ein zu reinigendes Lesegerät.

Der Erfindung liegt die Aufgabe zugrunde, eine Reinigungskarte der eingangs genannten Art anzugeben, die sowohl eine Reinigung von Leseköpfen und/oder Kontaktelementen an den Chipschreib-/-lesekontaktstationen als auch eine Reinigung des Transportmechanismus für die Magnetspur- und Chipkarten ermöglicht.

Diese Aufgabe wird bei einer Reinigungskarte der eingangs genannten Art durch die im kennzeichnenden Teil des Anspruchs 1 angegebenen Merkmale gelöst.

Während die Schreib- und Leseköpfe sowie die Kontaktelemente der Kontaktstationen durch das Faserflockmaterial gereinigt werden, wird der Transportmechanismus, d.h. die Transportrollen oder Bänder in den Geräten durch das Vliesmaterial des Kartenträgers selbst gereinigt. Vorzugsweise besteht dabei das Vliesmaterial aus Kunststoffasern, die ohne Bindemittel trocken miteinander verpreßt sind. Dieses trockenverpreßte Vliesmaterial hat eine hohe Formstabilität und verändert seine mechanischen Eigenschaften nicht, wenn es beispielsweise mit einer Reinigungsflüssigkeit. getränkt wird.

Die Länge der Einzelfasern des Faserflockreinigungsmaterials können wie bei der oben beschriebenen älteren Ausführungsform auf mindestens einem der vorgegebenen Flächenbereiche auf der einen oder anderen Kartenseite von der Länge der Einzelfasern auf den anderen Flächenbereichen verschieden sein, wobei die Einzelfasern auf den verschiedenen Flächenbereichen gleichen oder ungleichen Durchmesser haben können.

Für die Reinigung eines Hybrid-Schreib-/Lesegerätes, das neben einem Magnetkopf für das Lesen von Magnetstreifen und neben einer Chipkontaktstation für das Kontaktieren von Chipkontakten auf einer Chipkarte auch einen optischen Sensor zum Erfassen von optischen Kennzeichen auf einer Identitätskarte hat, ist es somit zweckmäßig, wenn ein erster Flächenbereich der Chipkontaktstation, ein zweiter Flächenbereich einem optischen Sensor und mindestens ein dritter Flächenbereich einem Magnetkopf des Schreib/Lesegerätes zugeordnet ist

Bei einem Hybrid-Schreib/Lesegerät der vorstehend genannten Art besteht der optische Sensor aus einem festen Block, in den ein Sensorauge eingelassen ist. Dieses vertieft angebrachte Sensorauge schaut auf eine Seite von Identitätskarten und liest eine mit dem bloßen Auge nicht erkennbare Sicherheitsaufschrift. Durch die bauartbedingte Vertiefung sammelt sich im Bereich des Sensorauges verstärkt Schmutz in Form von Staubflusen und Dreckpartikeln, die teils von der Karte, teils durch die Luftströmung von außen in das Schreib/Lesegerät gelangen. Das Sensorauge könnte mit einer herkömmlichen Reinigungskarte, die nur mit einem Vlies beschichtet ist, nicht gereinigt werden, da die Vliesbeschichtung nicht in das Sensorauge hineinreicht. Mit der erfindungsgemäßen Reinigungskarte dagegen, bei der die zum Reinigen der Kontakte und Sensoren bestimmten Flächenbereiche mit einem Faserflock beschichtet sind, wird das Sensorauge von den. Fasern erreicht und gereinigt Zweckmäßigerweise beträgt hierzu die Faserlänge des Faserflockmaterials in dem ersten und dem zweiten Flächenbereich ca. 6,5 bis 10 mm, vorzugsweise 8 mm. Die Faserstärke beträgt in dem ersten und dem zweiten Flächenbereich vorzugsweise ca. 3,3 bis 9,0 mg/m, vorzugsweise 6,7 mg/m. Das Faserflockmaterial wirkt in dem ersten und dem zweiten Flächenbereich als Bürste, die sowohl die Kontakte der Chipkontaktstation als auch das Sensorauge des optischen Sensors erreicht und reinigt.

Für das Reinigen des Magnetkopfes ist es dagegen zweckmäßig, ein kürzeres Fasermaterial zu verwenden. In diesem Falle beträgt die Faserlänge in dem dritten Flächenbereich ca. 0,3 bis 2 mm, vorzugsweise 0,5 bis 1 mm. Die Faserstärke liegt im Bereich von 0,17 bis 0,68 mg/m vorzugsweise bei 0,33 mg/m.

Die Anordnung der Flächenbereiche auf der Reinigungskarte hängt von der Bauart des Schreib/Lesegerätes ab, die sich wiederum nach der für die zu lesenden Chipkarten gewählten Norm richtet.

Je nach Bauart des Schreib/Lesegerätes kann es zweckmäßig sein, wenn der Vliesträger mit einem sich in seiner Einführungsrichtung erstreckenden Griffabschnitt verbunden ist. Dies erleichtert dem Servicepersonal oder auch dem Betreiber des Schreib/Lesegerätes das Einführen der Reinigungskarte von der Geräterückseite her. Die Länge des Griffabschnittes hängt dabei von der Bauart des Schreib/Lesegerätes ab.

Optimiert wird die Reinigungswirkung durch Nassreinigung, wofür das Faserflock-Reinigungsmaterial und auch der Vliesträger selbst mit einer Reinigungsflüssigkeit getränkt wird. Dies kann unmittelbar vor Gebrauch der Karte durch Aufsprühen erfolgen oder die Karte kann in einen Behälter mit der Reinigungsflüssigkeit eingetaucht werden. Vorzugsweise ist die Reinigungskarte, in mit einem flüssigen Reinigungsmittel befeuchtetem Zustand, von einem Aufreißbeutel umschlossen.

Femer betrifft die vorliegende Erfindung ein Verfahren zur Herstellung einer Reinigungskarte für Magnetspur- und Chipkarten-Schreib-/Lesegeräte, bei welchem ein in mehrere Karten zertrennbarer flächiger aus einem Vliesmaterial bestehender Träger mit einem weichen Reinigungsmaterial und gegebenenfalls mit einem codierbaren Material partiell beschichtet wird.

Dieses Verfahren zeichnet sich erfindungsgemäß dadurch aus, daß gegebenenfalls das codierbare Material in Form einer pigmentierten Siebdruckfarbe mehrfach im Siebdruckverfahren aufgedruckt wird; dann auf mindestens einer Kartenseite vorgegebene Flächenbereiche für das Reinigungsmaterial im Siebdruckverfahren mit einem 2-Komponenten-Kleber, z.B. einem Urethanklebstoff beschichtet werden; dann als Reinigungsmaterial dichtstehende Einzelfasern mit vorgegebener Länge und vorgegebenem Durchmesser im wesentlichen senkrecht in das Klebstoffbett der einzelnen Flächenbereiche eingesetzt werden; dann der flächige Vliesträger mit den Beschichtungen einem Trocknungsprozess unterzogen und anschließend die nichthaftenden Restfasern ausgewaschen werden.

Im weiteren können dann der flächige Vliesträger zur Bildung mehrerer Reinigungskarten oder -tücher geschnitten und die codierbaren Flächenbereiche codiert werden. Ferner werden dann die einzelnen Reinigungskarten mit einer Reinigungsflüssigkeit befeuchtet und je in einen Aufreißbeutel eingelagert.

Ausführungsformen des Erfindungsgegenstandes sind nachfolgend anhand der Zeichnung beispielsweise näher erläutert. Es zeigen:
- Figuren 1 und 2: die Chipkontaktseite (Draufsicht) und Seitenansicht einer Reinigungskarte, in wenigstens angenähert natürlicher Größe,
- Figur 3: in Draufsicht die Magnetkopfseite der Reinigungskarte gemäß Figur 1,
- Figur 4: einen Querschnitt durch die Reinigungskarte gemäß Figuren 1 bis 3 im Bereich eines Faserflock-Feldes, in größerem Maßstab,
- Figur 5: eine schematische Seitenansicht eines Schreib/Lesegerätes für das eine Reinigungskarte gemäß einer zweiten Ausführungsform der Erfindung bestimmt ist,
- Figur 6: einen schematischen Schnitt entlang der Linie VI-VI in Figur 5 parallel zur Kartentransportebene in dem Schreib/Lesegerät,
- Figur 7: eine Draufsicht auf die eine Seite der Reinigungskarte gemäß der zweiten Ausführungsform und
- Figur 8: eine Draufsicht auf die entgegengesetzte Seite der in Figur 7 abgebildeten Reinigungskarte.

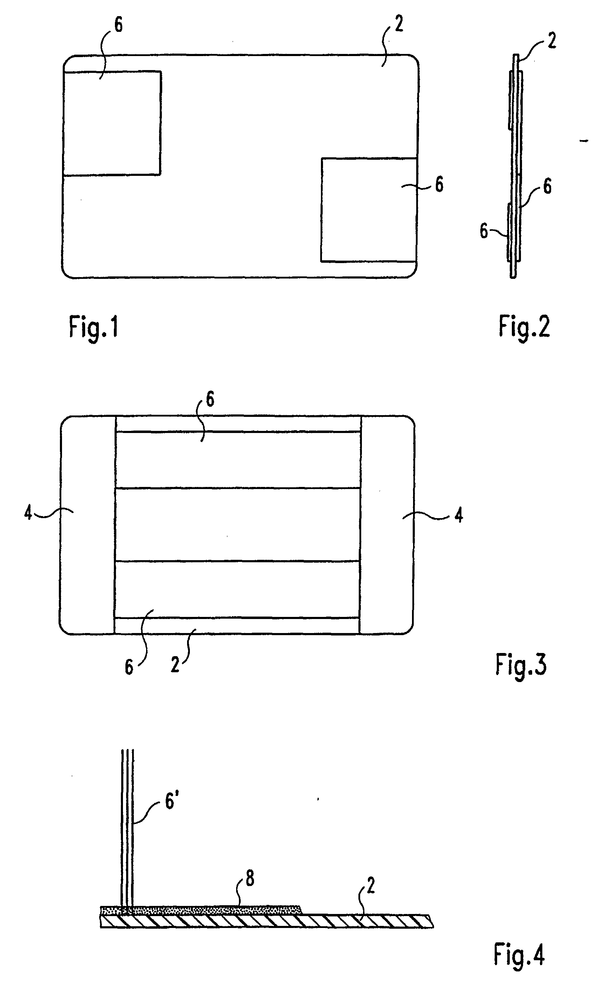

Der kartenförmige Träger 2 einer erfindungsgemäßen Reinigungskarte für Magnetspur- und Chipkarten-Schreib-/Lesegeräte mit partieller Beschichtung 4 mit einem codierbaren Material sowie mit partieller Beschichtung 6 mit einem weichen Reinigungsmaterial gemäß den Figuren 1 bis 4, besteht vorzugsweise aus einem Faservlies aus Kunststoffasern, die ohne Bindemittel trocken miteinander verpreßt wurden. Ein solches Vliesmaterial wird z.B. von der Firma Carl Freudenberg, Weinheim unter der Bezeichnung DR 1441 vertrieben. Es besitzt eine feine Oberfläche und bei geringer Stärke eine hohe Steifigkeit und Formstabilität.

Das Reinigungsmaterial 6 auf dem Träger 2 besteht aus einem Faserflock mit im wesentlichen vertikal vom Träger abragenden, dichtstehend aufgeklebten Einzelfasern 6' (Figur 4) mit vorgegebener Länge und vorgegebenem Durchmesser. Hierfür werden auf mindestens einer Kartenseite vorgegebene Flächenbereiche für das Reinigungsmaterial im Siebdruckverfahren mit einem 2-Komponenten-Kleber 8, z.B. einem Urethankleber beschichtet und dann dichtstehende Einzelfasern 6' mit vorgegebener Länge und vorgegebenem Durchmesser im wesentlichen senkrecht in das Klebstoffbett der einzelnen Flächenbereiche eingesetzt. Danach kann der flächige Kunststoffträger mit den Beschichtungen einem Trocknungsprozess unterzogen werden, worauf anschließend die nichthaftenden Restfasern ausgewaschen werden.

Das Verfahren zur Herstellung eines sogenannten Faserflocks ist an sich bekannt, wobei die Einzelfasern durch ein Sieb vereinzelt und parallel gerichtet werden, worauf die Spitzen der Fasern elektrostatisch aufgeladen werden, um die Fasern senkrecht in das Klebstoffbett einsetzen zu können.

Wie die Figuren 1 und 3 zeigen; umfaßt die Reinigungskarte eine Chipkontaktseite (Figur 1) und eine Magnetkopfseite (Figur 3), wo das Faserflock-Reinlgungsmaterial 6 auf mehreren vorgegebenen Flächenbereichen angeordnet ist. Hierbei können die Einzelfasern 6' des Faserflock-Reinigungsmaterials 6 auf den vorgegebenen Flächenbereichen der einen oder anderen Kartenseite von gleicher oder ungleicher Länge, beispielsweise 0,5 bis 1,5 mm, und von gleichem oder ungleichem Durchmesser, beispielsweise 0,33 bis 0,67 mg/m, sein.

Die Magnetkopfseite (Figur 3) trägt zudem partielle Beschichtungen 4 aus codierbarem Material, hier in Form eines mehrschichtigem Farbauftrages.

Unbeschichtete Flächenabschnitte der Reinigungskarte können mit Informationen bedruckt werden.

Wie bereits erwähnt, kann eine solche Reinigungskarte, in mit einem flüssigen Reinigungsmittel, beispielsweise Vertrel XF-P35, befeuchtetem Zustand, von einem Aufreißbeutel umschlossen sein (nicht gezeigt).

Zur Herstellung solcher Reinigungskarten wird vorzugsweise ein in mehrere Karten zertrennbarer flächiger Vliesträger partiell mit einem codierbaren Material sowie mit einem weichen Reinigungsmaterial beschichtet Hierbei wird das codierbare Material in Form einer pigmentierten Siebdruckfarbe mehrfach im Siebdruckverfahren aufgedruckt; dann werden auf mindestens einer Kartenseite vorgegebene Flächenbereiche für das Reinigungsmaterial im Siebdruckverfahren mit einem 2-Komponenten-Kleber beschichtet; dann werden als Reinigungsmaterial dichtstehende Einzelfasern mit vorgegebener Länge und vorgegebenem Durchmesser im wesentlichen senkrecht in das Klebstoffbett der einzelnen Flächenbereiche eingesetzt; dann werden der flächige Kunststoffträger mit den Beschichtungen einem Trocknungsprozess unterzogen und anschließend die nichthaftenden Restfasern ausgewaschen.

Danach werden der flächige Vieisträger zur Bildung mehrerer Reinigungskarten geschnitten und gegebenenfalls die codierbaren Flächenbereiche codiert. Die einzelnen Reinigungskarten werden dann mit einer Reinigungsflüssigkeit befeuchtet und je In einen Aufreißbeutel eingelagert.

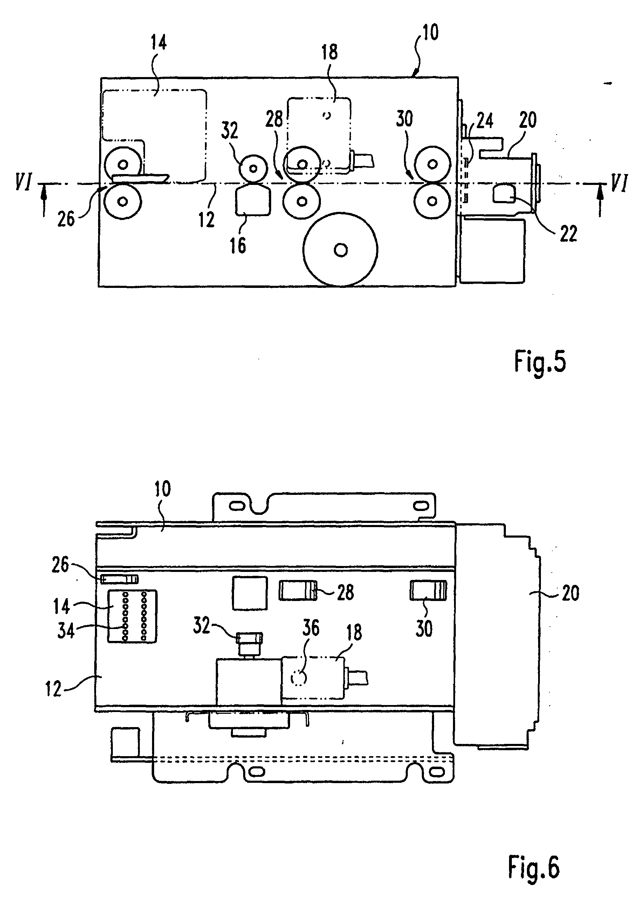

Die Figuren 5 und 6 zeigen ein an sich bekanntes Schreib-/Lesegerät für Identitätskarten, das daher auch nur mit seinen wichtigsten Bestandteilen dargestellt ist. Es umfaßt einen Rahmen 10, innerhalb dessen entlang einem Transportweg 12 eine Chipkontaktstation 14, ein Magnetkopf 16 und ein optischer Sensor 18, ein sogenannter MM-Sensor angeordnet sind. Am Eintrittsende des Gerätes ist eine Verschlußeinheit 20 angeordnet, die einen weiteren Magnetkopf 22 sowie einen beweglichen Verschluß 24 enthält. Zum Einziehen und Ausschieben einer Identitätskarte entlang dem Transportweg 12 dienen seitlich des Transportweges angeordnete Transportrollenpaare 26, 28, 30, Dem Magnetkopf 16 ist eine weitere Rolle 32 zugeordnet, welche die Identitätskarte gegen den Magnetkopf drückt. Die Transportrollen können durch den Vliesträger der Reinigungskarte gereinigt werden.

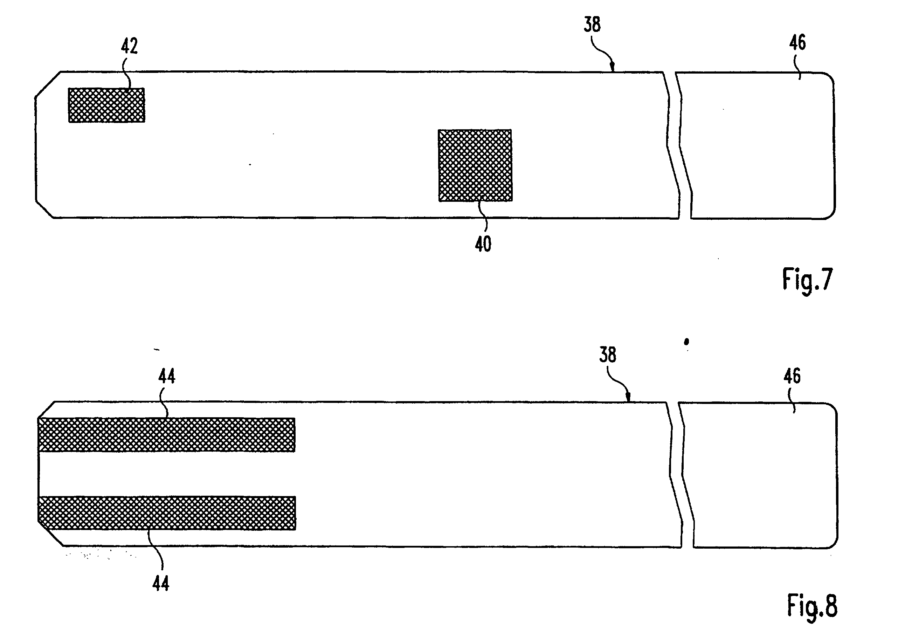

Die in den Figuren 7 und 8 dargestellte erfindungsgemäße Reinigungskarte soll das Reinigen der Kontaktelemente 34 der Chipkartenstation, des Magnetkopfes 16 und des Sensorauges 36 des Sensors 18 (Figur 6) von der Geräterückseite her ermöglichen, d.h. in den Figuren 5 und 6 von der linken Seite her. Die Reinigungskarte umfaßt einen länglich rechteckigen Vliesträger 38, der oben beschriebenen Art.

Auf seiner einen Seite hat der Vliesträger 38 zwei Flächenbereiche 40 und 42, die jeweils mit einem als Reinigungsmaterial dienenden Faserflock beschichtet sind. Der erste Flächenbereich 40 ist dabei der Chipkontaktstation 14 zugeordnet, während der zweite Flächenbereich 42 dem Sensor 18 zugeordnet ist. Die Länge der Fasern in diesen beiden Bereichen 40 und 42 beträgt zwischen 6,5 und 10 mm, vorzugsweise 8 mm. Die Faserstärke beträgt zwischen 3,3 und 9,0 mg/m vorzugsweise 6,7 mg/m. Die Anordnung der Flächenbereiche 40 und 42 auf dem Vliesträger 38 ist so gewählt, daß die Bereiche 40 und 42 beim Einschieben der Reinigungskarte von der Geräterückseite her in das Schreib/Lesegerät gleichzeitig unter der Chipkontaktstation 14 bzw. dem Sensor 18 zu liegen kommen. Da in diesem Fall die Kontaktelemente 34 der Chipkontaktstation 14 nicht abgesenkt sind, werden auch in dem Flächenbereich 40 die relativ langen Fasern von vorzugsweise 8 mm Länge benötigt.

Auf der entgegengesetzten Seite hat der Vliesträger 38 zwei streifenförmige zueinander parallele dritte Flächenbereiche 44, die ebenfalls mit Faserflock beschichtet sind und zum Reinigen des Magnetkopfes 16 dienen. Die Länge der Fasern in diesen Bereichen beträgt zwischen 0,3 und 2 mm, vorzugsweise 0,5 bis 1 mm. Ihr Stärke beträgt zwischen 0,17 und 0,68 mg/m, vorzugsweise 0,33 mg/m.

Die in den Figuren 7 und 8 dargestellte Reinigungskarte ist nach rechts hin durch einen Griffabschnitt 46 verlängert, mit dem die Karte leichter in das Gerät eingeführt werden kann.

Ferner kann die Reinigungskarte noch mit nicht dargestellten Flächenbereichen aus einem codierbaren Material, insbesondere Magnetstreifen versehen sein. Die auf diesen Codierstreifen aufgebrachte Information kann beispielsweise dazu dienen, eine Bewegung der Reinigungskarte innerhalb des Schreib/Lesegerätes zu veranlassen.

## Patentansprüche

1. Reinigungskarte für Magnetspur- und Chipkarten-Schreib-/Lesegeräte mit einem kartenförmigen Träger (2; 38), der partiell mit einem weichen Reinigungsmaterial (6) beschichtet ist, das auf mehreren vorgegebenen Flächenbereichen (40, 42, 44) des Trägers (2; 38) angeordnet ist, wobei das Reinigungsmaterial (6) aus einem Faserflock mit im wesentlichen senkrecht vom Träger (2; 38) abstehenden, dichtstehend aufgeklebten Einzelfasern (6') mit vorgegebener Länge und vorgegebenem Durchmesser besteht, **dadurch gekennzeichnet, daß** der Träger aus einem Vliesmaterial besteht und daß die Länge der Einzelfasern des Faserflock-Reinigungsmaterials (6) auf mindestens einem der vorgegebenen Flächenbereiche (40, 42, 44) auf der einen oder der anderen Kartenseite von der Länge der Einzelfasern auf den anderen Flächenbereichen verschieden ist, wobei die Einzelfasern auf den verschiedenen Flächen-bereichen gleichen oder ungleichen Durchmesser haben.

2. Reinigungskarte nach Anspruch 1, **dadurch gekennzeichnet, daß** das Vliesmaterial aus Kunststoffasern besteht, die ohne Bindemittel miteinander verpreßt sind.

3. Reinigunskarte nach Anspruch 1 oder 2, **dadurch gekennzeichnet, daß** auf mindestens einer Kartenseite das Faserflock-Reinigungsmaterial (6) auf mehreren vorgegebenen Flächenbereichen angeordnet ist.

4. Reinigungskarte nach einem der Ansprüche 1 bis 3, **dadurch gekennzeichnet, daß** diese, in mit einem flüssigen Reinigungsmittel befeuchtetem Zustand, von einem Aufreißbeutel umschlossen ist.

5. Reinigungskarte nach einem der Ansprüche 1 bis 4, **dadurch gekennzeichnet, daß** ein erster Flächenbereich (40) einer Chipkontaktstation (14) und mindestens ein dritter Flächenbereich (44) einem Magnetkopf (16) oder auch zusätzlich ein zweiter Flächenbereich (42) einem optischen Sensor (18) des Schreib-/Lesegeräts zugeordnet ist.

6. Reinigungskarte nach Anspruch 5, **dadurch gekennzeichnet, daß** die Faserlänge des Faserflockmaterials in dem ersten und dem zweiten Flächenbereich (40, 42) ca. 6,5 bis 10 mm, vorzugsweise 8 mm beträgt.

7. Reinigungskarte nach Anspruch 6, **dadurch gekennzeichnet, daß** die Faserstärke in dem ersten und dem zweiten Flächenbereich (40, 42) ca. 3,3 bis 9,0 mg/m, vorzugsweise 6,7 mg/m beträgt.

8. Reinigungskarte nach einem der Ansprüche 5 bis 7, **dadurch gekennzeichnet, daß** die Faserlänge des Faserflockmaterials in dem dritten Flächenbereich (44) ca. 0,3 bis 2 mm, vorzugsweise 0,5 bis 1 mm beträgt.

9. Reinigungskarte nach Anspruch 8, **dadurch gekennzeichnet, daß** die Faserstärke in dem dritten Flächenbereich (44) ca. 0,17 bis 0,68 mg/m, vorzugsweise 0,33 mg/m beträgt.

10. Reinigungskarte nach einem der Ansprüche 5 bis 9, **dadurch gekennzeichnet, daß** der erste und der zweite Flächenbereich (40, 42) auf der einen Seite des kartenförmigen Trägers (38) und der dritte Flächenbereich (44) auf der anderen Seite des Trägers (38) angeordnet sind.

11. Reinigungskarte nach einem der Ansprüche 5 bis 10, **dadurch gekennzeichnet, daß** der Träger (38) mit einem sich in seiner Einführungsrichtung erstreckenden Griffabschnitt (46) verbunden ist.

12. Reinigungskarte nach einem der Ansprüche 1 bis 11, **dadurch gekennzeichnet, daß** der kartenförmige Träger (2; 38) partiell mit einem codierbaren Material beschichtet ist.

13. Reinigungskarte nach einem der Ansprüche 1 bis 12, **dadurch gekennzeichnet, daß** der kartenförmige Träger (2; 28) aus Kunststoff besteht.

14. Verfahren zur Herstellung einer Reinigungskarte für Magnetspur- und Chipkarten-Schreib-/Lesegeräte, bei welchem ein in mehrere Karten zertrennbarer flächiger Träger partiell mit einem weichen Reinigungsmaterial beschichtet wird, **dadurch gekennzeichnet, daß** auf mindestens einer Kartenseite des aus einem Vliesmaterial bestehenden Trägers vorgegebene Flächenbereiche für das Reinigungsmaterial im Siebdruckverfahren mit einem 2-Komponenten-Kleber beschichtet werden;
daß als Reinigungsmaterial dichtstehende Einzelfasern mit vorgegebener Länge und vorgegebenem Durchmesser im wesentlichen senkrecht in das Klebstoffbett der einzelnen Flächenbereiche eingesetzt werden;
daß der flächige Vliesträger mit den Beschichtungen einem Trocknungsprozeß unterzogen wird,
daß anschließend die nichthaftenden Restfasern ausgewaschen werden und
daß der Vliesträger zusätzlich partiell mit einem codierbaren Material beschichtet wird, indem das codierbare Material in Form einer pigmentierten Siebdruckfarbe mehrfach im Siebdruckverfahren aufgedruckt wird.

15. Verfahren nach Anspruch 14, **dadurch gekennzeichnet, daß** als Klebstoff ein Urethanklebstoff verwendet wird.

16. Verfahren nach Anspruch 14 oder 15, **dadurch gekennzeichnet, daß** der flächige Vliesträger zur Bildung mehrerer Reinigungskarten geschnitten und die codierbaren Flächenbereiche codiert werden.

17. Verfahren nach einem der Ansprüche 14 bis 16, **dadurch gekennzeichnet, daß** die einzelnen Reinigungskarten mit einer Reinigungsflüssigkeit befeuchtet und je in einen Aufreißbeutel eingelagert werden.

## Claims

1. A cleaning card for magnetic track and chip card writing/reading devices with a card-shaped carrier (2; 38) which is partially coated with a soft cleaning material (6) that is arranged on several predetermined surface areas (40, 42, 44) of the carrier (2; 38), the cleaning material (6) consisting of a fibre flock with individual fibres (6') of predetermined length and predetermined diameter, said fibres being glued on in a densely standing manner and projecting substantially perpendicularly from the carrier (2; 38), **characterized in that** the carrier is made of a fleece material and **in that** the length of the individual fibres of the fibre flock cleaning material (6) on at least one of the predetermined surface areas (40, 42, 44) on the one or the other card side is different from the length of the individual fibres on the other surface areas, the individual fibres on the various surface areas having the same or different diameters.

2. The cleaning card according to claim 1, **characterized in that** the fleece material is made of plastic fibres which are pressed together without a binding agent.

3. The cleaning card according to claim 1 or 2, **characterized in that** on at least one side of the card the fibre flock cleaning material (6) is arranged on several predetermined surface areas.

4. The cleaning card according to one of the claims 1 to 3, **characterized in that** said cleaning card is enclosed in a tear open bag in a condition in which it is moistened with a liquid cleaning agent.

5. The cleaning card according to one of the claims 1 to 4, **characterized in that** a first surface area (40) is allocated to a chip contact station (14) and at least a third surface area (44) is allocated to a magnetic head (16) or also additionally a second surface area (42) is allocated to an optical sensor (18) of the writing/reading device.

6. The cleaning card according to claim 5, **characterized in that** the fibre length of the fibre flock material in the first and in the second surface areas (40, 42) amounts to approximately 6.5 to 10 mm, preferably 8 mm.

7. The cleaning card according to claim 6, **characterized in that** the fibre strength in the first and in the second surface areas (40, 42) amounts to 3.3 to 9.0 mg/m, preferably 6.7 mg/m.

8. The cleaning card according to one of the claims 5 to 7, **characterized in that** the fibre length of the fibre flock material in the third surface area (44) amounts to approximately 0.3 to 2 mm, preferably 0.5 to 1 mm.

9. The cleaning card according to claim 8, **characterized in that** the fibre strength in the third surface area (44) amounts to approximately 0.17 to 0.68 mg/m, preferably 0.33 mg/m.

10. The cleaning card according to one of the claims 5 to 9, **characterized in that** the first and the second surface areas (40, 42) are arranged on the one side of the card-shaped carrier (38) and the third surface area (44) is arranged on the other side of the carrier (38).

11. The cleaning card according to one of the claims 5 to 10, **characterized in that** the carrier (38) is connected to a grip section (46) extending in the insertion direction of the carrier.

12. The cleaning card according to one of the claims 1 to 11, **characterized in that** the card-shaped carrier (2; 38) is partially coated with a codable material.

13. The cleaning card according to one of the claims 1 to 12, **characterized in that** the card-shaped carrier (2; 38) is made of plastic.

14. A method for manufacturing a cleaning card for magnetic track and chip card writing/reading devices, in which a flat carrier separable into several cards is partially coated with a soft cleaning material, **characterized in that** on at least one card side of the carrier consisting of a fleece material predetermined surface areas for the cleaning material are coated with a two component adhesive by the screen printing method,
**in that**, as a cleaning material, densely standing individual fibres with predetermined length and predetermined diameter are inserted substantially perpendicularly into the adhesive bed of the individual surface areas,
**in that** the flat fleece carrier with the coatings is subjected to a drying process,
**in that** subsequently the non-adhering remaining fibres are washed away, and
**in that** the fleece carrier is additionally partially coated with a codable material, by multiply printing the codable material in the form of a pigmented screen printing ink by the screen printing method.

15. The method according to claim 14, **characterized in that** urethane glue is used as the adhesive.

16. The method according to claim 14 or 15, **characterized in that** the flat fleece carrier is cut to form several cleaning cards and the codable surface areas are coded.

17. The method according to one of the claims 14 to 16, **characterized in that** the individual cleaning cards are moistened with a cleaning liquid and are each stored in a tear open bag.

## Revendications

1. Carte de nettoyage pour des appareils d'écriture/lecture de pistes magnétiques et de cartes à puce, comprenant un support (2, 38) en forme de carte, qui est revêtu partiellement d'une matière (6) souple de nettoyage, qui est disposée sur plusieurs parties (40, 42, 44) de surface prescrite du support (2, 38), la matière (6) de nettoyage étant constituée d'une bourre de fibres ayant des fibres (6') individuelles partant sensiblement perpendiculairement du support (2, 38), collées de manière drue, d'une longueur prescrite et d'un diamètre prescrit, **caractérisée en ce que** le support est en un non-tissé et **en ce que** la longueur des fibres individuelles de la matière (6) de nettoyage en bourre de fibres sur au moins l'une des parties (40, 42, 44) de la surface prescrite sur l'une ou l'autre des faces de la carte est différente de la longueur des fibres individuelles sur les autres parties de surface, les fibres individuelles ayant sur les diverses parties de surface des diamètres égaux ou différents.

2. Carte de nettoyage suivant la revendication 1, **caractérisée en ce que** le non-tissé est constitué de fibres de matière plastique qui sont pressées les unes avec les autres sans liant.

3. Carte de nettoyage suivant la revendication 1 ou 2, **caractérisée en ce qu'**au moins sur une face de la carte, la matière (6) de nettoyage en bourre de fibres est disposée sur plusieurs parties de surface prescrites.

4. Carte de nettoyage suivant l'une des revendications 1 à 3, **caractérisée en ce qu'**elle est entourée, à l'état humidifié par de l'agent de nettoyage liquide, d'un sachet à déchirer.

5. Carte de nettoyage suivant l'une des revendications 1 à 4, **caractérisée en ce qu'**une première partie (40) de surface est associée à un poste (14) de contact de puce et au moins une troisième partie (44) de surface à une tête (16) magnétique ou aussi en plus une deuxième partie (40) de surface est associée à un capteur (18) optique de l'appareil d'écriture/lecture.

6. Carte de nettoyage suivant la revendication 5, **caractérisée en ce que** la longueur des fibres de la matière en bourre de fibres dans la première et dans la deuxième parties (40, 42) de surface est comprise entre 6,5 et 10 mm, et de préférence est de 8 mm.

7. Carte de nettoyage suivant la revendication 6, **caractérisée en ce que** la solidité des fibres dans la première et dans la deuxième parties (40, 42) de surface est comprise entre 3,3 et 9,0 mg/m environ, et est de préférence de 6,7 mg/m.

8. Carte de nettoyage suivant l'une des revendications 5 à 7, **caractérisée en ce que** la longueur des fibres de la matière de la bourre de fibres dans la troisième partie (44) de surface est comprise entre 0,3 et 2 mm environ, et est de préférence comprise entre 0,5 et 1 mm.

9. Carte de nettoyage suivant la revendication 8, **caractérisée en ce que** la solidité des fibres dans la troisième partie (44) de surface est comprise entre 0,17 et 0,68 mg/m environ, et de préférence est de 0,33 mg/m.

10. Carte de nettoyage suivant l'une des revendications 5 à 9, **caractérisée en ce que** la première et la deuxième parties (40, 42) de surface sont disposées sur l'une des faces du support (38) en forme de carte et la troisième partie (44) de surface sur l'autre face du support (38).

11. Carte de nettoyage suivant l'une des revendications 5 à 10, **caractérisée en ce que** le support (38) est relié à une partie (46) de préhension s'étendant dans sa direction d'insertion.

12. Carte de nettoyage suivant l'une des revendications 1 à 11, **caractérisée en ce que** le support (2, 38) en forme de carte est revêtu partiellement d'une matière qui peut être codée.

13. Carte de nettoyage suivant l'une des revendications 1 à 12, **caractérisée en ce que** le support (2, 28) en forme de carte est en matière plastique.

14. Procédé de fabrication d'une carte de nettoyage pour les appareils d'écriture/lecture de pistes magnétiques et de cartes à puce, dans lequel on revêt un support ayant de la surface et qui peut être séparé en plusieurs cartes d'une matière souple de nettoyage, **caractérisé en ce qu'**on revêt sur au moins une face de la carte du support constitué en un non-tissé des parties de surface prescrites pour la matière de nettoyage suivant un procédé de sérigraphie d'une colle à deux constituants ;
**en ce qu'**on insère sensiblement perpendiculairement dans le lit de colle des parties individuelles de surface, comme matière de nettoyage, des fibres individuelles drues, d'une longueur prescrite et d'un diamètre prescrit ;
**en ce que** l'on soumet le support non-tissé ayant de la surface et comprenant les revêtements à une opération de séchage,
**en ce qu'**ensuite on élimine par lavage les fibres restantes qui n'adhèrent pas et,
**en ce qu'**on revêt le support en non-tissé en plus partiellement d'une matière pouvant être codée en imprimant la matière pouvant être codée sous la forme d'une encre sérigraphique pigmentée par un procédé de sérigraphie.

15. Procédé suivant la revendication 14, **caractérisé en ce qu'**on utilise comme colle une colle d'uréthane ;

16. Procédé suivant la revendication 14 ou 15, **caractérisé en ce que** l'on découpe le support non-tissé présentant de la surface pour former plusieurs cartes de nettoyage et on code les parties de surface qui peuvent être codées.

17. Procédé suivant l'une des revendications 14 à 16, **caractérisé en ce que** l'on humidifie les diverses cartes de nettoyage par un fluide de nettoyage et on les met respectivement dans un sachet à déchirer.
